# EUROPÄISCHE PATENTANMELDUNG

(11) **EP 1 580 584 A1**
(43) Veröffentlichungstag der Anmeldung: **28.09.2005**
(21) Anmeldenummer: 04011172.6
(22) Anmeldetag: 11.05.2004
(51) Int. Cl.: G02B 6/38

(54) **Ferrule für einen Lichtleiter**

(30) Priorität: 23.03.2004 GB 0406490
(71) Anmelder: Delphi Technologies, Inc., Troy, MI 48007 (US)
(72) Erfinder: Röder, Jürgen, 34393 Grebenstein (DE); Herlitz, Martin, 42897 Remscheid (DE); Schekalla, Peter, 42329 Wuppertal (DE); Pscheidt, Jürgen, 58332 Schwelm (DE)
(74) Vertreter: Manitz, Finsterwald & Partner GbR

(57) **Zusammenfassung**

Eine Ferrule für einen Lichtleiter umfasst eine zusammenhängende Metallhülse (22), die einen ersten rohrförmigen Abschnitt (28) und in einem axialen Abstand davon einen koaxialen zweiten rohrförmigen Abschnitt (30) aufweist, die über einen Zwischenabschnitt miteinander verbunden sind, sowie einen um das freie Ende des ersten rohrförmigen Abschnitts geformten ersten Kunststoffformstoffteil (24) und einen in einem axialen Abstand davon vorgesehenen zweiten Kunststoffformteil (26), das um die dem Zwischenabschnitt benachbarten Enden der beiden rohrförmigen Abschnitte sowie um den Zwischenabschnitt geformt ist.

## Beschreibung

Die Erfindung betrifft eine Ferrule für einen Lichtleiter, einen Lichtleiter mit zugeordneter Ferrule sowie ein Verfahren zur Montage einer Ferrule an einem Lichtleiter.

Die bisher üblichen Lichtleiter umfassen im Kraftfahrzeugbereich einen Kunststoffkern sowie eine oder mehrere Umhüllungsschichten. Am Lichtleiterende ist ein Endanschlussstück oder ein Ferrule angebracht, um den Lichtleiter mit einem anderen Lichtleiter oder einer Lichtsende- und/oder Lichtempfangseinrichtung verbinden zu können. Die bisherigen Ferrules bestehen im Kraftfahrzeugbereich in der Regel aus Kunststoffformstoff. Der Lichtleiterkern besitzt in der Regel einen Durchmesser im Bereich von 1 mm.

Im Hinblick auf eine größere Flexibilität sowie eine verbesserte Übertragung besteht der Wunsch des Einsatzes eines aus Glasfasermaterial bestehenden Lichtleiterkerns mit einem im Vergleich zu den bisher üblichen Durchmessern deutlich kleineren Durchmesser von beispielsweise etwa 200 µm. Angesichts der Herstellungstoleranzen sind die bisher üblichen Ferrules jedoch zur Verwendung solch kleinerer Lichtleiterkerne ungeeignet. Die üblichen, im Telekommunikationsbereich verwenden Präzisionsferrules sind insbesondere für Anwendungen im Kraftfahrzeugbereich größtenteils äußerst kompliziert, aufwändig und aus mehreren Einzelteilen zusammengesetzt, so dass sie relativ kostspielig sind.

Der Erfindung liegt die Aufgabe zugrunde, eine verbesserte Ferrule der eingangs genannten Art zu schaffen, mit der die zuvor genannten Probleme beseitigt sind. Überdies soll auch ein entsprechend verbesserter Lichtleiter mit zugeordneter Ferrule geschaffen sowie ein entsprechend verbessertes Verfahren zur Montage einer Ferrule an einem Lichtleiter angegeben werden.

Zum einen wird diese Aufgabe erfindungsgemäß gelöst durch eine Ferrule für einen Lichtleiter, mit einer zusammenhängenden Metallhülse, die einen ersten rohrförmigen Abschnitt und in einem axialen Abstand davon einen koaxialen zweiten rohrförmigen Abschnitt aufweist, die über einen Zwischenabschnitt miteinander verbunden sind, sowie mit einem um das freie Ende des ersten rohrförmigen Abschnitts geformten ersten Kunststoffformstoffteil und einem in einem axialen Abstand davon vorgesehenen zweiten Kunststoffformteil, das um die dem Zwischenabschnitt benachbarten Enden der beiden rohrförmigen Abschnitte sowie um den Zwischenabschnitt geformt ist.

Mit einer solchen einteiligen Verbundferrule wird eine stabile und sehr robuste Form der Ferrule erreicht, wobei die mechanische Verbindung mittels der Metallhülse erfolgt und die Führung sowie Positionierung in dem Hohlraum der Ferrule durch die beiden Kunststoffformstoffteile sichergestellt werden. Hinzukommt, dass im Innern der Ferrule keine Kanten oder Stufen auftreten.

Bevorzugt besitzt der erste rohrförmige Abschnitt einen kleineren Innendurchmesser als der zweite rohrförmige Abschnitt. Im ersten rohrförmigen Abschnitt kann also der zumindest teilweise von einer oder mehreren Umhüllungsschichten befreite Endbereich des Lichtleiters untergebracht werden, während der betreffende Lichtleiterabschnitt im zweiten rohrförmigen Abschnitt zumindest noch eine Umhüllungsschicht mehr umfassen kann.

Bei einer bevorzugten praktischen Ausführungsform der erfindungsgemäßen Ferrule besitzt das erste Kunststoffformstoffteil eine zu den beiden rohrförmigen Abschnitten der zusammenhängenden Metallhülse koaxiale Durchgangsöffnung.

Das erste Kunststoffformstoffteil kann über das freie Ende des ersten rohrförmigen Abschnitts der zusammenhängenden Metallhülse vorstehen.

Die Durchgangsöffnung besitzt bevorzugt einen kleineren Innendurchmesser als die beiden rohrförmigen Abschnitte der zusammenhängenden Metallhülse. Diese Durchgangsöffnung kann also einen Lichtleiterendabschnitt aufnehmen, der beispielsweise vollständig abisoliert oder beispielsweise lediglich noch mit einem Mantel versehen ist, wobei der Innendurchmesser der Durchgangsöffnung dann entsprechend an den kleineren Außendurchmesser des betreffenden Lichtleiterendabschnitts angepasst ist. Es erfolgt somit insbesondere auch eine Positionierung des Lichtleiters durch das erste Kunststoffformstoffteil.

Das erste Kunststoffformstoffteil kann überdies mit einer Außenlippe versehen sein. Eine solche Außenlippe kann beispielsweise der Positionierung der Ferrule in dem jeweiligen Verbinderteil eines betreffenden Steckverbinders dienen.

Die Wandung des ersten rohrförmigen Abschnitts der Metallhülse ist vorzugsweise mit Öffnungen versehen, in die ein Teil des Materials des ersten Kunststoffformstoffteils eingreift.

Bei einer bevorzugten praktischen Ausführungsform der erfindungsgemäßen Ferrule sind freiliegende Bereiche der beiden rohrförmigen Abschnitte der Metallhülse mit dem Lichtleiter vercrimpt.

Die beiden Kunststoffformstoffteile können durch ein Hochpräzisionspolymer wie insbesondere ein Flüssigkristallpolymer (LCP = liquid crystal polymer) gebildet sein.

Die Ferrule ist zweckmäßigerweise aus einem Stanzteil gefertigt, bei dem zumindest die beiden rohrförmigen Abschnitte durch anschließendes Rollen erzeugt sind.

Die zuvor genannte Aufgabe wird überdies gelöst durch einen Lichtleiter, dem eine Ferrule nach einem der Ansprüche 1 bis 11 zugeordnet.

Der Kern eines solchen Lichtleiters besteht vorzugsweise aus Glasfaser. Dabei ist vorteilhafterweise ein Kern aus PCS (Polymer Clad Silica) vorgesehen.

Der Durchmesser des Kerns des Lichtleiters kann beispielsweise in einem Bereich von etwa 9 bis 1000 µm liegen, wobei er vorzugsweise jedoch in einem Bereich von etwa 200 µm liegt.

Der Lichtleiter kann zumindest bereichsweise mit wenigstens einer Umhüllungsschicht wie insbesondere einer Mantelschicht, einer Pufferschicht und/oder einer Außenschicht versehen sein.

Im Bereich des ersten rohrförmigen Abschnitts der Metallhülse kann der Lichtleiter beispielsweise noch mit einer Mantelschicht oder mit einer solchen Mantelschicht und einer Pufferschicht versehen sein, wobei der Innendurchmesser des ersten rohrförmigen Abschnitts der Metallhülse im Wesentlichen gleich dem Außendurchmesser der Mantelschicht bzw. der Pufferschicht ist.

Im Bereich des zweiten rohrförmigen Abschnitts der Metallhülse kann der Lichtleiter beispielsweise zumindest noch mit einer Mantelschicht, einer Pufferschicht und einer Außenschicht versehen sein, wobei der Innendurchmesser des zweiten rohrförmigen Abschnitts der Metallhülse im Wesentlichen gleich dem Außendurchmesser der Außenschicht ist.

Das Verfahren zur Montage einer Ferrule nach einem Lichtleiter umfasst erfindungsgemäß die folgenden Verfahrensschritte:
- Stanzen der Metallhülse aus einem Blech,
- Bilden der beiden rohrförmigen, einen axialen Abstand voneinander aufweisenden Abschnitte der Metallhülse durch Rollen des Stanzteils,
- Umspritzen des freien Endes des ersten rohrförmigen Abschnitts der Metallhülse mit dem ersten Kunststoffformstoffteil und Umspritzen der dem Zwischenabschnitt benachbarten Enden der beiden rohrförmigen Abschnitte sowie des Zwischenabschnitts der Metallhülse mit dem zweiten Kunststoffformteil.

Dabei kann das Stanzteil an einer Förderkette oder -streifen gebildet und die Metallhülse nach erfolgtem Umspritzen der beiden rohrförmigen Abschnitte mit den beiden Kunststoffformteilen von der Förderkette bzw. -streifen getrennt werden, wobei eine Trennung z.B. erst unmittelbar vor dem Bestücken mit dem Lichtleiterende denkbar ist.

Das freie Lichtleiterende wird bevorzugt vom zweiten rohrförmigen Abschnitt der Metallhülse her bis zur Durchgangsöffnung des ersten Kunststoffformstoffteils oder darüber hinaus in die Ferrule eingesetzt.

Nach dem Einsetzen des freien Leiterendes werden die freiliegenden Bereiche der beiden rohrförmigen Abschnitte der Metallhülse mit dem Lichtleiter vorzugsweise vercrimpt.

Nach dem Vercrimpen kann das freie Lichtleiterende abgetrennt und bearbeitet werden.

Für eine sehr schnelle Datenübertragung mittels Laserlicht können nunmehr also insbesondere Glasfasern wie vorzugsweise PCS (Polymer Clad Silica) eingesetzt werden. Für eine Trennstelle von optischen Leitungen wird eine einteilige Verbundferrule vorgeschlagen. Durch Stanzen und Rollen wird eine Metallhülse erzeugt und an zwei Stellen durch ein Polymer umspritzt, wodurch ein stabile und sehr robuste Form der Ferrule erreicht wird. Es werden u.a. die folgenden spezifischen Funktionen zweckmäßig und unabhängig voneinander realisiert:
- die mechanische Verbindung wird mittels einer Metallhülse bewirkt
- definierter und beidseitig geschlossener Crimpbereich
- genaue Positionierung der optischen Leitung durch den vorderen, durch das erste Kunststoffformstoffteil gebildeten Kunststoff-Zylinder
- Führung und Position in der Aufnahme der Ferrule durch die beiden Kunststoffformstoffteile
- keine Kanten oder Stufen im Innern der Ferrule.

Die Erfindung ist insbesondere für Glasfasersysteme beispielsweise im Kraftfahrzeugbereich anwendbar. Als Transportmedium für Multimediaanwendungen ist insbesondere die Verwendung von PCS (Polymer Clad Silica) möglich. Es ergibt sich insbesondere ein äußerst robuster Aufbau, indem alle relevanten Funktionen integriert sind. Es sind nunmehr insbesondere Hochpräzisionsferrules mit einem Kerndurchmesserbereich von beispielsweise etwa 200 µm aus Glasfaser (z.B. PCS) realisierbar. Zu den wesentlichen Verfahrensschritten bei der Montage der Ferrule zählen das Stanzen sowie das Umspritzen. Die Positionierung und Ausrichtung einer Ferrule gegenüber einer anderen VCSL (vertical cavity service emitting laser) erfolgt über ein Hochpräzisionspolymer wie beispielsweise ein Flüssigkristallpolymer (LCP = liquid crystal polymer). Die Montage des Lichtleiters erfolgt über doppeltes Umspritzen einer mit dem Lichtleiter vercrimpten Metallhülse. Die betreffende Ferrule bringt u.a. die folgenden Vorteile mit sich:
- stabiler und robuster Aufbau
- hohe Präzision
- Führung in der Aufnahme der Ferrule
- definierte und geschützte Crimpbereiche
- keine scharfen Ecken innerhalb der Ferrule
- Transportstreifen für eine automatische Montage möglich.

Die Erfindung wird im Folgenden anhand von Ausführungsbeispielen unter Bezugnahme auf die Zeichnung näher erläutert; in dieser zeigen:
- Fig. 1: eine perspektivische Ansicht eines Lichtleiters vor dem Anbringen einer Ferrule gemäß der Erfindung,
- Fig. 2: perspektivische Ansichten des Lichtleiters gemäß Fig. 1 mit und ohne Ferrule gemäß der Erfindung,
- Fig. 3: eine perspektivische Ansicht des Lichtleiters gemäß Fig. 1 mit daran angebrachter erfindungsgemäßer Ferrule,
- Fig. 4: eine Querschnittsdarstellung des Lichtleiters gemäß Fig. 3 mit zugeordneter Ferrule, geschnitten entlang der Linie 4-4 in Fig. 3,
- Fig. 5: eine Querschnittsdarstellung der in der Fig. 3 gezeigten Ferrule,
- Fig. 6: einzelne Schritte des erfindungsgemäßen Verfahrens zur Montage der Ferrule an den Lichtleiter und
- Fig. 7: eine Seitenansicht, eine Querschnittsdarstellung sowie eine perspektivische Ansicht der erfindungsgemäßen Ferrule.

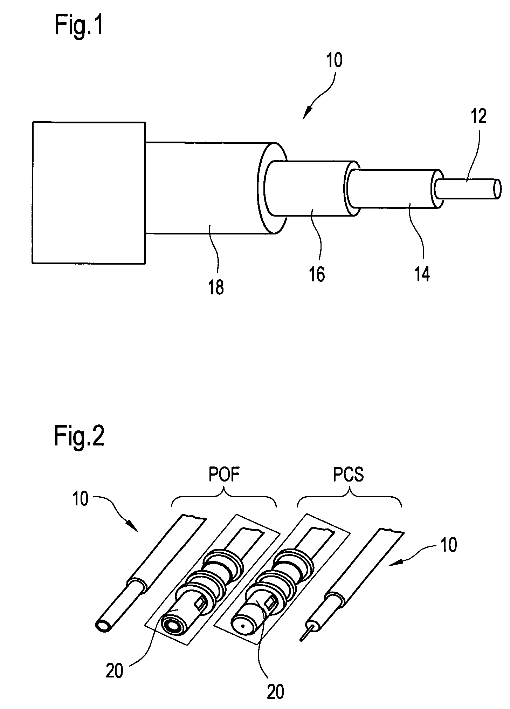

Fig. 1 zeigt in perspektivischer Ansicht einen Lichtleiter 10 vor dem Anbringen einer Ferrule gemäß der Erfindung. Dieser Lichtleiter 10 umfasst beispielsweise einen aus Fasermaterial bestehenden Lichtleiterkern 12, eine Mantelschicht 14, eine Pufferschicht 16 (vorzugsweise schwarz), sowie eine Außenhülle 18. Der Lichtleiterkern 12 besteht vorzugsweise aus Glasfasermaterial, und er besitzt vorzugsweise einen Durchmesser im Bereich von etwa 200 µm.

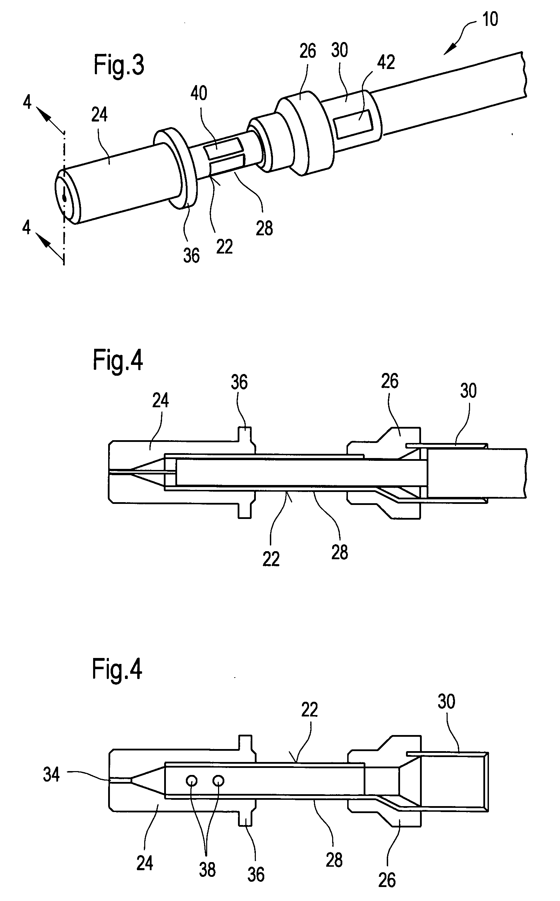

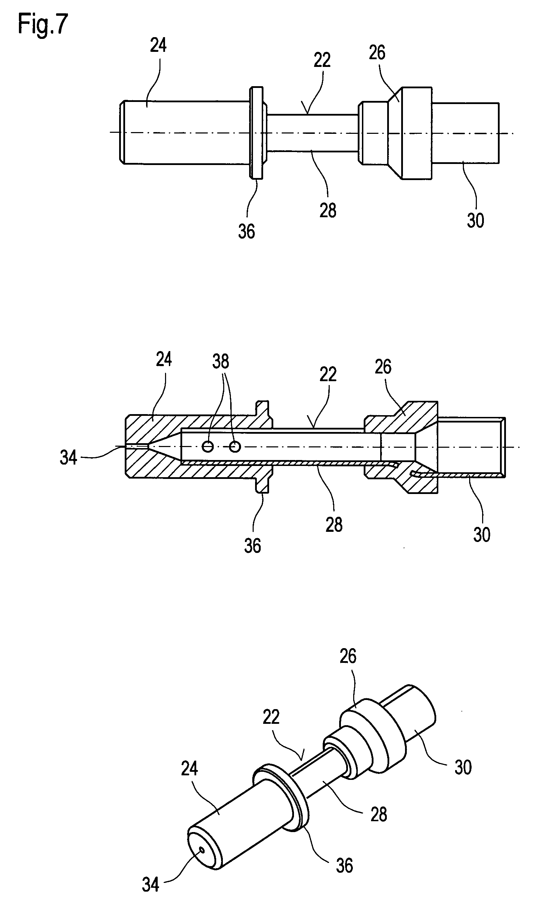

Fig. 2 zeigt perspektivische Ansichten des Lichtleiters 10 mit und ohne Ferrule 20 gemäß der Erfindung. Eine entsprechende Ferrule 20 ist insbesondere auch in den Fig. 3 bis 5 und 7 dargestellt. Danach umfasst die Ferrule 20 drei Teile, nämlich eine Metallhülse 22 sowie einen ersten und einen zweiten Kunststoffformstoffteil 24, 26, die vorzugsweise aus einem Hochpräzisionspolymer wie beispielsweise einem Flüssigkristallpolymer (LCP = liquid crystal polymer) geformt sind.

Die zusammenhängende Metallhülse 22 umfasst einen rohrförmigen Abschnitt 28 und in einem axialen Abschnitt davon einen koaxialen zweiten rohrförmigen Abschnitt 30, die über einen Zwischenabschnitt 32 miteinander verbunden sind.

Das erste Kunststoffformstoffteil 24 ist um das freie Ende des ersten rohrförmigen Abschnitts 28 und das in einem axialen Abstand davon vorgesehene zweite Kunststoffformstoffteil 26 um die dem Zwischenabschnitt 32 benachbarten Enden der beiden rohrförmigen Abschnitte 28, 30 sowie um den Zwischenabschnitt 32 geformt.

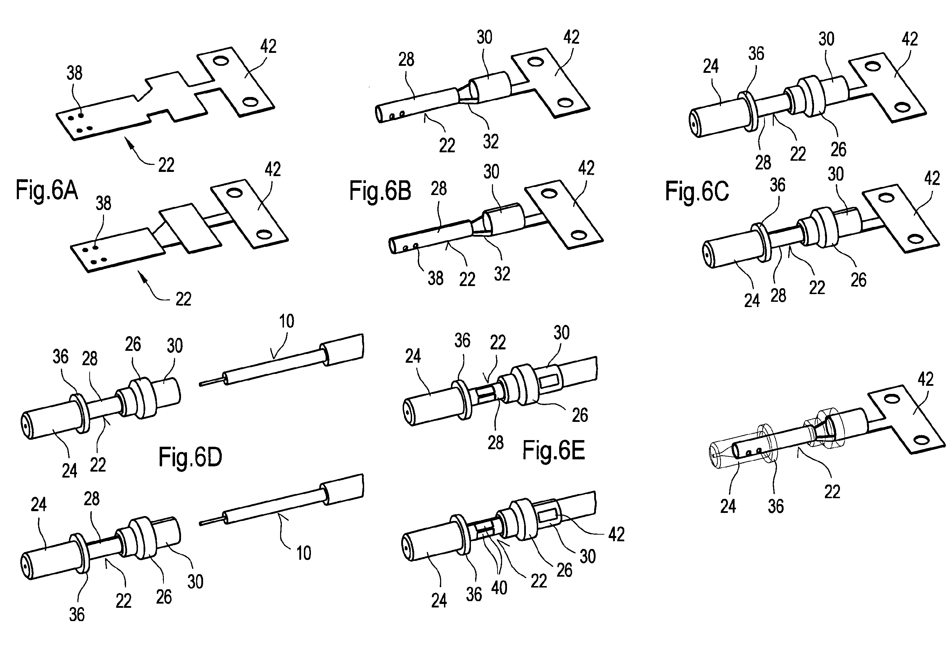

Im vorliegenden Fall besitzt der erste rohrförmige Abschnitt 28 einen kleineren Innendurchmesser als der zweite rohrförmige Abschnitt 30. Wie insbesondere anhand der Fig. 6 zu erkennen ist, kann der Zwischenabschnitt 32 über einen Teil seines Umfangs offen sein und beispielsweise einen konischen Verlauf besitzen.

Wie sich insbesondere aus der Fig. 5 ergibt, besitzt das erste Kunststoffformstoffteil 24 eine zu den beiden rohrförmigen Abschnitten 28, 30 der zusammenhängenden Metallhülse 22 koaxiale Durchgangsöffnung 34. Im vorliegenden Fall steht das erste Kunststoffformstoffteil 24 über das freie Ende des ersten rohrförmigen Abschnitts 28 der zusammenhängenden Metallhülse 22 vor, wobei die Durchgangsöffnung 34 im Bereich des freien Endes des vorspringenden Teils vorgesehen ist.

Die Durchgangsöffnung 34 besitzt in Anpassung an den jeweiligen Faserdurchmesser einen kleineren Innendurchmesser als die beiden rohrförmigen Abschnitte 28, 30 der zusammenhängenden Metallhülse 22.

Zumindest das erste Kunststoffformstoffteil 24 kann mit einer Außenlippe 36 versehen sein.

Wie insbesondere anhand der Fig. 5 bis 7 zu erkennen ist, kann zumindest die Wandung des ersten rohrförmigen Abschnitts 28 der Metallhülse 22 mit Öffnungen 28 versehen sein, in die ein Teil des Materials des ersten Kunststoffformstoffteils 24 eingreift.

Freiliegende Bereiche 40, 42 der beiden rohrförmigen Abschnitte 28, 30 der Metallhülse 22 sind mit dem Lichtleiter 10 vercrimpt.

Die Ferrule 20 kann insbesondere aus einem Stanzteil gefertigt sein, bei dem zumindest die beiden rohrförmigen Abschnitte 28, 30 durch anschließendes Rollen erzeugt sind.

Der Kern des Lichtleiters 10 besteht vorzugsweise aus Glasfaser, wobei er insbesondere aus PCS (Polymer Clad Silica) bestehen kann.

Der Durchmesser des Kerns 12 des Lichtleiters 10 kann beispielsweise in einem Bereich von etwa 9 bis etwa 1000 µm liegen, wobei er vorzugsweise jedoch in einem Bereich von etwa 200 µm liegt.

Wie bereits erwähnt, kann der Lichtleiter 10 zumindest bereichsweise mit wenigstens einer Umhüllungsschicht wie insbesondere einer Mantelschicht 14, einer Pufferschicht 16 und/oder einer Außenschicht oder - hülle 18 versehen sein.

Ist der Lichtleiter 10 nun im Bereich des ersten rohrförmigen Abschnitts 28 der Metallhülse 22 beispielsweise noch mit einer Mantelschicht 14 oder mit einer solchen Mantelschicht 14 und einer Pufferschicht 16 versehen, so kann der Innendurchmesser des ersten rohrförmigen Abschnitts der Metallhülse 22 im Wesentlichen gleich dem Außendurchmesser der Mantelschicht 14 bzw. der Pufferschicht 16 sein.

Im Bereich des zweiten rohrförmigen Abschnitts 30 der Metallhülse 22 kann der Lichtleiter 10 beispielsweise noch mit einer Mantelschicht 14, einer Pufferschicht 16 und einer Außenschicht 18 versehen sein. In diesem Fall ist der Innendurchmesser des zweiten rohrförmigen Abschnitts 30 der Metallhülse 22 im Wesentlichen gleich dem Außendurchmesser der Außenschicht 18.

Die einzelnen Schritte des erfindungsgemäßen Verfahrens zur Montage der Ferrule 20 an dem Lichtleiter 10 ergeben sich insbesondere aus der Fig. 6.

Danach wird die Metallhülse 22 aus einem Blech gestanzt. Das Stanzteil ist an einer Kette oder einem Streifen 44 mit einer Vielzahl weiteren identischen Stanzteilen gebildet. Das Stanzteil wird dann gerollt, um die in einem axialen Abstand voneinander vorgesehenen ersten und zweiten koaxialen rohrförmigen Abschnitte 28, 30 zu bilden.

Der erste rohrförmige Abschnitt 28 besitzt einen Innendurchmesser, der zumindest im Wesentlichen gleich dem Außendurchmesser der Mantelschicht 14 oder der Pufferschicht 16 des Lichtleiters 10 ist. Der zweite rohrförmige Abschnitt 30 besitzt einen Innendurchmesser, der im Wesentlichen gleich dem Außendurchmesser der Außenhülle des Lichtleiters 10 ist. Die beiden Kunststoffformstoffteile 24, 26 werden dann an axialen, einen Abstand voneinander aufweisenden Stellen auf die Metallhülse 22 gespritzt. Dabei wird das erste Kunststoffformstoffteil 24 um das Ende des ersten rohrförmigen Abschnitts 28 geformt, wobei es mit einer Umfangs-Außenlippe 36 und einer inneren Durchgangsöffnung 34 versehen sein kann. Die Durchgangsöffnung 34 ist koaxial zu den beiden rohrförmigen Abschnitten 28, 30 und besitzt einen minimalen Durchmesser, der im Wesentlichen gleich dem Außendurchmesser des Kerns oder der Mantelschicht 14 des Lichtleiters 10 ist.

Die Öffnungen 38 im ersten rohrförmigen Abschnitt 28 bewirken, dass das erste Kunststoffformstoffteil 24 besser am ersten rohrförmigen Abschnitt 28 haftet bzw. an diesem angreift. Das zweite Kunststoffformstoffteil 26 wird an die beiden rohrförmigen Abschnitte 28, 30 sowie über den Bereich zwischen den beiden rohrförmigen Abschnitten 28, 30 geformt. Nach erfolgtem Formvorgang und beispielsweise unmittelbar vor dem Bestücken mit dem Lichtleiterende wird die Metallhülse 22 von der Kette bzw. dem Streifen 44 getrennt. Verschiedene Schichten werden dann vom Ende des Lichtleiters entfernt. Der Lichtleiter 10 wird dann vom zweiten rohrförmigen Abschnitt 30 her in die Ferrule 20 eingeführt, bis der Kern die Durchgangsöffnung 34 des ersten Kunststoffformstoffteils 24 erreicht hat oder aus diesem vorsteht. Freiliegende Bereiche der beiden rohrförmigen Abschnitte 28, 30 werden dann mit dem Lichtleiter 10 vercrimpt. Nach dem Vercrimpen kann das freiliegende Ende des Kerns abgetrennt und bearbeitet werden.

Es ergibt sich somit eine Ferrule 20 stabilen und robusten Aufbaus, mit der die bezüglich der Herstellungstoleranzen geforderte hohe Präzision sichergestellt ist. Die Ferrule besitzt eine Einführungsöffnung für den Lichtleiter sowie vordefinierte Crimpbereiche, und sie kann ohne innere scharfe Kanten gebildet werden. Das Metallteil kann auf einer Kette oder einem Streifen zur anschließenden automatischen Produktion der Ferrule bereitgestellt werden.

### Bezugszeichenliste

- 10: Lichtleiter
- 12: Lichtleiterkern
- 14: Mantelschicht
- 16: Pufferschicht
- 18: Außenhülle, -schicht
- 20: Ferrule
- 22: Metallhülse
- 24: erstes Kunststoffformstoffteil
- 26: zweites Kunststoffformstoffteil
- 28: erster rohrförmiger Abschnitt
- 30: zweiter rohrförmiger Abschnitt
- 32: Zwischenabschnitt
- 34: Durchgangsöffnung
- 36: Außenlippe
- 38: Öffnung
- 40: Crimpbereich
- 42: Crimpbereich
- 44: Kette, Streifen

## Patentansprüche

1. Ferrule (20) für einen Lichtleiter (10), mit einer zusammenhängenden Metallhülse (22), die einen ersten rohrförmigen Abschnitt (28) und in einem axialen Abstand davon einen koaxialen zweiten rohrförmigen Abschnitt (30) aufweist, die über einen Zwischenabschnitt (32) miteinander verbunden sind, sowie mit einem um das freie Ende des ersten rohrförmigen Abschnitts (28) geformten ersten Kunststoffformstoffteil (24) und einem in einem axialen Abstand davon vorgesehenen zweiten Kunststoffformteil (26), das um die dem Zwischenabschnitt (32) benachbarten Enden der beiden rohrförmigen Abschnitte (28, 30) sowie um den Zwischenabschnitt (32) geformt ist.

2. Ferrule nach Anspruch 1,
**dadurch gekennzeichnet ,**
**dass** der erste rohrförmige Abschnitt (28) einen kleineren Innendurchmesser besitzt als der zweite rohrförmige Abschnitt (30).

3. Ferrule nach einem der vorhergehenden Ansprüche,
**dadurch gekennzeichnet ,**
**dass** das erste Kunststoffformstoffteil (24) eine zu den beiden rohrförmigen Abschnitten (28, 30) der zusammenhängenden Metallhülse (22) koaxiale Durchgangsöffnung (34) besitzt.

4. Ferrule nach einem der vorhergehenden Ansprüche,
**dadurch gekennzeichnet ,**
**dass** das erste Kunststoffformstoffteil (24) über das freie Ende des ersten rohrförmigen Abschnitts (28) der zusammenhängenden Metallhülse (22) vorsteht.

5. Ferrule nach Anspruch 3 oder 4,
**dadurch gekennzeichnet ,**
**dass** die Durchgangsöffnung (34) einen kleineren Innendurchmesser als die beiden rohrförmigen Abschnitte (28, 30) der zusammenhängenden Metallhülse (22) besitzt.

6. Ferrule nach einem der vorhergehenden Ansprüche,
**dadurch gekennzeichnet ,**
**dass** das erste Kunststoffformstoffteil (24) mit einer Außenlippe (36) versehen ist.

7. Ferrule nach einem der vorhergehenden Ansprüche,
**dadurch gekennzeichnet ,**
**dass** die Wandung des ersten rohrförmigen Abschnitts (28) der Metallhülse (22) mit Öffnungen (38) versehen ist, in die ein Teil des Materials des ersten Kunststoffformstoffteil (24) eingreift.

8. Ferrule nach einem der vorhergehenden Ansprüche,
**dadurch gekennzeichnet ,**
**dass** freiliegende Bereiche (40, 42) der beiden rohrförmigen Abschnitte (28, 30) der Metallhülse (22) mit dem Lichtleiter (10) vercrimpt sind.

9. Ferrule nach einem der vorhergehenden Ansprüche,
**dadurch gekennzeichnet ,**
**dass** die beiden Kunststoffformstoffteile (24, 26) durch ein Hochpräzisionspolymer wie insbesondere ein Flüssigkristallpolymer (LCP) gebildet sind.

10. Ferrule nach einem der vorhergehenden Ansprüche,
**dadurch gekennzeichnet ,**
**dass** sie aus einem Stanzteil gefertigt ist, bei dem zumindest die beiden rohrförmigen Abschnitte (28, 30) durch anschließendes Rollen erzeugt sind.

11. Lichtleiter (10) mit zugeordneter Ferrule nach einem der vorhergehenden Ansprüche.

12. Lichtleiter nach Anspruch 11,
**dadurch gekennzeichnet ,**
**dass** der Kern (12) des Lichtleiters (10) aus Glasfaser besteht.

13. Lichtleiter nach Anspruch 11 oder 12,
**dadurch gekennzeichnet ,**
**dass** der Kern (12) des Lichtleiters (10) aus PCS (Polymer Clad Silica) besteht.

14. Lichtleiter nach einem der vorhergehenden Ansprüche,
**dadurch gekennzeichnet ,**
**dass** der Durchmesser des Kerns (12) des Lichtleiters (10) in einem Bereich von etwa 9 bis etwa 1000 *µ*m und vorzugsweise in einem Bereich von etwa 200 *µ*m liegt.

15. Lichtleiter nach einem der vorhergehenden Ansprüche,
**dadurch gekennzeichnet ,**
**dass** der Lichtleiter (10) zumindest bereichsweise mit wenigstens einer Umhüllungsschicht wie insbesondere einer Mantelschicht (14), einer Pufferschicht (16) und/oder einer Außenschicht (18) versehen ist.

16. Lichtleiter nach Anspruch 15,
**dadurch gekennzeichnet ,**
**dass** der Lichtleiter (10) im Bereich des ersten rohrförmigen Abschnitts (28) der Metallhülse (22) noch mit einer Mantelschicht (14) oder mit einer solchen Mantelschicht (14) und einer Pufferschicht (16) versehen ist und dass der Innendurchmesser des ersten rohrförmigen Abschnitts der Metallhülse (22) im Wesentlichen gleich dem Außendurchmesser der Mantelschicht (14) bzw. der Pufferschicht (16) ist.

17. Lichtleiter nach Anspruch 15 oder 16,
**dadurch gekennzeichnet ,**
**dass** der Lichtleiter (10) im Bereich des zweiten rohrförmigen Abschnitts (30) der Metallhülse (22) zumindest noch mit einer Mantelschicht (14), einer Pufferschicht (16) und einer Außenschicht (18) versehen ist und dass der Innendurchmesser des zweiten rohrförmigen Abschnitts (30) der Metallhülse (22) im Wesentlichen gleich dem Außendurchmesser der Außenschicht (18) ist.

18. Verfahren zur Montage einer Ferrule (20) nach einem der Ansprüche 1 bis 11 an einem Lichtleiter (10) mit den folgenden Verfahrensschritten:
- Stanzen der Metallhülse (22) aus einem Blech,
- Bilden der beiden rohrförmigen, einen axialen Abstand voneinander aufweisenden Abschnitte (28, 30) der Metallhülse (22) durch Rollen des Stanzteils,
- Umspritzen des freien Endes des ersten rohrförmigen Abschnitts (28) der Metallhülse (22) mit dem ersten Kunststoffformstoffteil (24) und Umspritzen der dem Zwischenabschnitt (32) benachbarten Enden der beiden rohrförmigen Abschnitte (28, 30) sowie des Zwischenabschnitts (32) der Metallhülse (22) mit dem zweiten Kunststoffformteil (26).

19. Verfahren nach Anspruch 18,
**dadurch gekennzeichnet ,**
**dass** das Stanzteil an einer Förderkette oder -streifen (42) gebildet und die Metallhülse nach erfolgtem Umspritzen der beiden rohrförmigen Abschnitte mit den beiden Kunststoffformstoffteilen und insbesondere vor dem Bestücken mit dem Lichtleiterende von der Förderkette bzw. -streifen getrennt wird.

20. Verfahren nach Anspruch 18 oder 19,
**dadurch gekennzeichnet ,**
**dass** das freie Lichtleiterende vom zweiten rohrförmigen Abschnitt der Metallhülse her bis zur Durchgangsöffnung des ersten Kunststoffformstoffteil oder darüber hinaus in die Ferrule eingesetzt wird.

21. Verfahren nach Anspruch 20,
**dadurch gekennzeichnet ,**
**dass** nach dem Einsetzen des freien Leiterendes die freiliegenden Bereiche der beiden rohrförmigen Abschnitte der Metallhülse mit dem Lichtleiter vercrimpt werden.

22. Verfahren nach Anspruch 2 oder 21,
**dadurch gekennzeichnet ,**
**dass** das freie Lichtleiterende nach dem Vercrimpen abgetrennt und bearbeitet wird.
